# EUROPÄISCHE PATENTANMELDUNG

(11) **EP 1 126 307 A1**
(43) Veröffentlichungstag der Anmeldung: **22.08.2001**
(21) Anmeldenummer: 01890032.4
(22) Anmeldetag: 12.02.2001
(51) Int. Cl.: G02C 5/22

(54) **Scharniergelenk zwischen einem Bügel und einem Bügelbacken einer Brille**

(30) Priorität: 14.02.2000 AT 2172000
(71) Anmelder: Simon Redtenbacher seel. Wwe. & Söhne GmbH & Co. KG, 4644 Scharnstein (AT)
(72) Erfinder: Buchegger, Harald, 4817 St.Konrad 78 (AT)
(74) Vertreter: Hübscher, Helmut, Dipl.-Ing.

(57) **Zusammenfassung**

Ein Scharniergelenk zwischen einem Bügel (4) und einem Bügelbacken einer Brille besteht aus zwei über Verbindungsansätze (3) einerseits mit dem Bügel (4) und anderseits mit dem Bügelbacken verbundenen Scharnierteilen, von denen der eine einen Scharnierzapfen (1) aus Kunststoff und der andere ein den Scharnierzapfen (1) aufnehmendes Lagergehäuse (2) mit einem sich über den Schwenkwinkel des Scharniergelenkes erstreckenden Umfangsschlitz (6) für den Durchtritt des dem Scharnierzapfen (1) zugehörigen Verbindungsansatzes bilden. Um vorteilhafte Konstruktionsbedingungen zu schaffen, wird vorgeschlagen, daß die Mantelfläche des Scharnierzapfens (1) eine Strukturierung in Form von radial vorstehenden, sich elastisch an die Innenwandung des Lagergehäuses (2) anschmiegenden Erhebungen (11) aufweist.

## Beschreibung

Die Erfindung bezieht sich auf ein Scharniergelenk zwischen einem Bügel und einem Bügelbacken einer Brille, bestehend aus zwei über Verbindungsansätze einerseits mit dem Bügel und anderseits mit dem Bügelbacken verbundenen Scharnierteilen, von denen der eine einen Scharnierzapfen aus Kunststoff und der andere ein den Scharnierzapfen aufnehmendes Lagergehäuse mit einem sich über den Schwenkwinkel des Scharniergelenkes erstreckenden Umfangsschlitz für den Durchtritt des dem Scharnierzapfen zugehörigen Verbindungsansatzes bilden.

Zur einfachen Ausbildung schraubenloser Scharniergelenke von Brillen ist es bekannt, am Bügelende einen Scharnierzapfen vorzusehen, der in einem mit dem Bügelbacken verbundenen Lagergehäuse drehbar gehalten wird, das aus einer Lagerbuchse mit einem sich über den Schwenkwinkel des Scharniergelenkes erstreckenden Umfangsschlitz für den Durchtritt des Bügels sowie mit einem axialen Einführschlitz besteht, der von einer offenen Stirnseite der Lagerbuchse ausgeht und in einem Endbereich des Umfangsschlitzes mündet. Der Scharnierzapfen kann daher in axialer Richtung in die das Lagergehäuse bildende Lagerbuchse in einer Drehstellung eingesetzt werden, in der der Bügel in den axialen Einführschlitz eingreift. Gelangt der Bügel durch den Einführschlitz in den Bereich des Umfangsschlitzes, so kann der Bügel entlang des Umfangsschlitzes aus dem Bereich des Einführschlitzes verschwenkt werden, was mit einer axialen Festlegung des Schamierzapfens gegenüber dem Lagergehäuse verbunden ist, so daß es keiner weiteren Sicherungsmaßnahmen bedarf, wenn der Einführschlitz außerhalb des üblichen Schwenkbereiches zwischen Bügel und Bügelbacken liegt. Obwohl der Scharnierzapfen aus Kunststoff gefertigt ist, ergeben sich jedoch unbefriedigende Verhältnisse hinsichtlich der Gängigkeit eines solchen Scharniergelenkes, weil die Reibungsbedingungen entscheidend von der Maßhaltigkeit des Lagergehäuses und des Scharnierzapfens abhängen. Dies führt insbesondere unter Bedingungen einer Serienfertigung aufgrund der unvermeidbaren Fertigungstoleranzen zu einer unterschiedlichen Gängigkeit solcher Scharniergelenke, die nachträglich kaum hinsichtlich ihrer Gängigkeit eingestellt werden können.

Der Erfindung liegt somit die Aufgabe zugrunde, ein Scharniergelenk zwischen einem Bügel und einem Bügelbacken einer Brille der eingangs geschilderten Art so auszugestalten, daß auch unter Bedingungen einer Serienfertigung eine vorteilhafte, von Fertigungstoleranzen weitgehend unabhängige Gängigkeit des Scharniergelenkes sichergestellt werden kann.

Die Erfindung löst die gestellte Aufgabe dadurch, daß die Mantelfläche des Scharnierzapfens eine Strukturierung in Form von radial vorstehenden, sich elastisch an die Innenwandung des Lagergehäuses anschmiegenden Erhebungen aufweist.

Aufgrund der Strukturierung der Mantelfläche des Scharnierzapfens können die Toleranzbereiche so gewählt werden, daß ein Anliegen des Scharnierzapfens an der Innenwandung des Lagergehäuses sichergestellt wird, ohne eine unerwünschte Schwergängigkeit des Scharniergelenkes befürchten zu müssen. Die eine Strukturierung der Mantelfläche ergebenden Erhebungen können sich nämlich bei einer entsprechenden Formgebung unter einer elastischen Verformung an die Innenwandung des Gehäuses anschmiegen, ohne eine radiale Pressung in Kauf nehmen zu müssen, die die Gängigkeit des Scharniergelenkes beeinträchtigt. Im Bereich der elastischen Verformung der Erhebungen der Mantelfläche stellt sich somit ein wirksamer Toleranzausgleich ein, der eine angestrebte Gängigkeit von Scharniergelenken der gattungsgemäßen Art auch unter Bedingungen einer Serienfertigung ermöglicht. Dies gilt auch für den Einsatz von härteren Kunststoffen, die für eine ausreichende Halterung metallischer Bügel in den Scharnierzapfen erforderlich sind, weil das im Hinblick auf die Fertigungstoleranzen geforderte Ausmaß der elastischen Verformungen durch eine entsprechende Querschnittsbemessung ohne weiteres sichergestellt werden kann.

Für die die Strukturierung der Mantelfläche des Scharnierzapfens bildenden Erhebungen können unterschiedliche Ausführungsformen eingesetzt werden, wenn nur gewährleistet ist, daß sich die Erhebungen elastisch an die Innenwandung des Lagergehäuses anschmiegen. Eine Möglichkeit der Ausbildung der Erhebungen besteht darin, auf der Mantelfläche des Scharnierzapfens axiale Rippen vorzusehen, deren Kämme sich an die Innenwandung des Lagergehäuses anlegen. Die axiale Ausrichtung dieser Rippen erleichtert die Fertigung des Scharnierzapfens durch ein Spritzgießen, weil die Scharnierzapfen in axialer Richtung einfach entformt werden können. Bestehen die Erhebungen auf der Mantelfläche des Scharnierzapfens aus in Umfangsrichtung verlaufenden Rippen, so bieten sich Vorteile hinsichtlich der Rippenbeanspruchung im Scharniergelenk.

Die Erhebungen zur Strukturierung der Mantelfläche müssen jedoch den Scharnierzapfen nicht im Bereich von Berührungslinien an der Innenwandung des Lagergehäuses abstützen. Es genügt, wenn die Abstützung in Punktbereichen erfolgt, wie sie sich ergeben, wenn die Erhebungen auf der Mantelfläche des Scharnierzapfens die Form von Pyramiden oder Kegeln aufweisen. Auch bei einer solchen Ausführungsform wird eine entsprechende Abstützung des Scharnierzapfens an der Innenwandung des Lagergehäuses unter einem Toleranzausgleich mit dem Vorteil erreicht, daß eine angestrebte Gängigkeit des Scharniergelenkes weitgehend eingehalten werden kann. Soll die Scharnierzapfenabstützung im Lagergehäuse nicht nur auf Linien- oder Punktbereiche beschränkt werden, so können die Erhebungen über einen biegeelastischen Ansatz mit dem zylindrischen Grundkörper des Scharnierzapfens verbunden sein, was wiederum eine ausreichende elastische Verformung der strukturierten Mantelfläche zuläßt, um einen Toleranzausgleich zu schaffen.

In der Zeichnung ist der Erfindungsgegenstand beispielsweise dargestellt. Es zeigen
- Fig. 1: ein erfindungsgemäßes Scharniergelenk zwischen einem Bügel und einem Bügelbacken in einer schematischen Seitenansicht,
- Fig. 2: dieses Scharniergelenk in einem Schnitt nach der Linie II-II der Fig. 1 und
- Fig. 3: einen Scharnierzapfen in einer schematischen Seitenansicht.

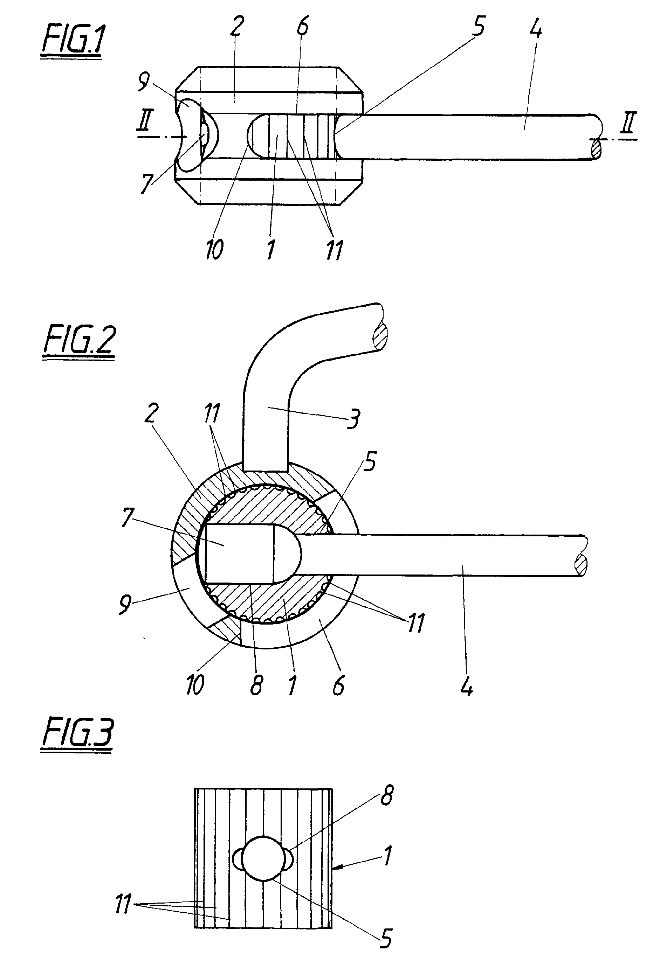

Gemäß den Fig. 1 und 2 besteht das Scharniergelenk des dargestellten Ausführungsbeispieles aus einem Scharnierzapfen 1 aus Kunststoff und einem zylindrischen, metallischen Lagergehäuse 2, das an einem Verbindungsansatz 3 eines Bügelbackens angelötet ist. Der Bügel 4 ist in eine Durchgangsöffnung 5 des Scharnierzapfens 1 eingesetzt und durchsetzt das Lagergehäuse 2 in einem Umfangsschlitz 6, der den möglichen Schwenkwinkel des Scharniergelenkes bestimmt. Da das scharnierseitige Bügelende einen flachgedrückten, verbreiterten Ansatz 7 bildet, der in eine entsprechende, endseitige Erweiterung 8 der Durchgangsöffnung 5 eingreift, was eine verdrehsichere Halterung des Bügels 4 um die Bügelachse mit sich bringt, kann der Bügel 4 nur von seinem freien Ende her auf der Seite der Erweiterung 8 in den Scharnierzapfen 1 eingeführt, nicht aber in der Einführrichtung aus dem Scharnierzapfen 1 herausgezogen werden. Damit der Bügel 4 erst nach dem Einsetzen des Scharnierzapfens 1 in das eine Lagerbuchse bildende Lagergehäuse 2 in den Scharnierzapfen 1 eingeführt werden kann, weist das Lagergehäuse 2 eine entsprechende Einführöffnung 9 auf, die gemäß der Fig. 2 dem einen Ende des Umfangsschlitzes 6 diametral gegenüberliegt, so daß der Bügel 4 in einer entsprechenden Drehstellung des Scharnierzapfens 1 gegenüber dem Lagergehäuse 2 durch die Einführöffnung 9 in die Durchgangsöffnung 5 des Scharnierzapfens 1 eingeführt werden kann, um auf der gegenüberliegenden Seite des Lagergehäuses 2 durch den Umfangsschlitz 6 auszutreten. Der Bügel 4 kann demnach durch den Scharnierzapfen 1 gezogen werden, bis der verbreiterte Ansatz 7 in die entsprechende Erweiterung 8 der Durchgangsöffnung 5 eingreift und der Scharnierzapfen 1 innerhalb des Gehäuses 2 verdreht werden kann. Diese Drehbewegung wird durch den Umfangsschlitz 6 begrenzt, der einen die Strecklage des Bügels 4 bestimmenden Anschlag 10 für den Bügel 4 bildet. Der innerhalb des Umfangsschlitzes 6 geführte Bügel 4 stellt dabei eine axiale Sicherung für den Scharnierzapfen 1 dar. Da außerdem der Bügel 4 mit seinem verbreiterten Ansatz 7 innerhalb des Lagergehäuses 2 zu liegen kommt, wird das Ausschieben des Bügels 4 aus dem Scharnierzapfen 1 entgegen der Einführrichtung im üblichen Schwenkbereich wirksam verhindert. Wie der Fig. 2 entnommen werden kann, liegt die Drehstellung zum Einführen des Brillenbügels 4 in den Scharnierzapfen 1 außerhalb des üblichen Schwenkbereiches des Bügels 4, so daß es keiner zusätzlichen Sicherungsmaßnahmen zur Halterung des Bügels 4 im Scharnierzapfen 1 und des Scharnierzapfens 1 im Lagergehäuse 2 bedarf.

Um eine vorgegebene Gängigkeit des Scharniergelenkes auch bei Fertigungstoleranzen unter Bedingungen einer Serienfertigung sicherzustellen, ist die Mantelfläche des Scharnierzapfens 1 strukturiert ausgebildet, und zwar in Form von Erhebungen 11, die sich aufgrund der gewählten Toleranzbereiche elastisch an die Innenwandung des Lagergehäuses 2 anschmiegen, wie dies der Fig. 2 entnommen werden kann. Durch diese Erhebungen 11, die im dargestellten Ausführungsbeispiel als axiale Rippen ausgebildet sind, kann eine spielfreie Aufnahme des Scharnierzapfens 1 im Lagergehäuse 2 gewährleistet werden, ohne einen die Scharniergängigkeit beeinträchtigenden Preßsitz befürchten zu müssen. Die Querschnittsform der Erhebungen 11 kann nämlich stets so gestaltet werden, daß sich im Anlagebereich an der Innenwandung des Lagergehäuses 2 eine elastische Verformung einstellt, die eine Schwergängigkeit des Scharniergelenkes unterbindet. Die örtlich beschränkte Abstützung des Scharnierzapfens 1 an der Innenwandung des Lagergehäuses 2 über die Erhebungen 11 bringt somit den für das Einhalten einer angestrebten Gängigkeit des Scharniergelenkes erforderlichen Toleranzausgleich mit sich.

Die Erfindung ist selbstverständlich nicht auf das dargestellte Ausführungsbeispiel beschränkt. So könnte der Scharnierzapfen 1 auch an den Brillenbügel 4 angespritzt werden, was jedoch ein Einführen des Bügels 4 in den Umfangsschlitz 6 über einen axialen Einführschlitz erfordert. Außerdem können die axialen Rippen der Erhebungen 11 durch Umfangsrippen, beispielsweise in Form eines Schraubenganges, oder durch Pyramiden oder Kegel ersetzt werden. Um den notwendigen Toleranzausgleich zu schaffen, könnten außerdem die Erhebungen 11 über biegeelastische Ansätze mit dem zylindrischen Grundkörper des Scharnierzapfens 1 verbunden sein. Es kommt ja lediglich darauf an, daß aufgrund einer elastischen Anpassung der Erhebungen 11 die unvermeidbaren Fertigungstoleranzen ausgeglichen werden.

## Patentansprüche

1. Scharniergelenk zwischen einem Bügel und einem Bügelbacken einer Brille, bestehend aus zwei über Verbindungsansätze einerseits mit dem Bügel und anderseits mit dem Bügelbacken verbundenen Scharnierteilen, von denen der eine einen Scharnierzapfen aus Kunststoff und der andere ein den Scharnierzapfen aufnehmendes Lagergehäuse mit einem sich über den Schwenkwinkel des Scharniergelenkes erstreckenden Umfangsschlitz für den Durchtritt des dem Scharnierzapfen zugehörigen Verbindungsansatzes bilden, dadurch gekennzeichnet, daß die Mantelfläche des Scharnierzapfens (1) eine Strukturierung in Form von radial vorstehenden, sich elastisch an die Innenwandung des Lagergehäuses (2) anschmiegenden Erhebungen (11) aufweist.

2. Scharniergelenk nach Anspruch 1, dadurch gekennzeichnet, daß die Erhebungen (11) auf der Mantelfläche des Scharnierzapfens (1) aus axialen Rippen bestehen.

3. Scharniergelenk nach Anspruch 1, dadurch gekennzeichnet, daß die Erhebungen (11) auf der Mantelfläche des Scharnierzapfens (1) aus in Umfangsrichtung verlaufenden Rippen bestehen.

4. Scharniergelenk nach Anspruch 1, dadurch gekennzeichnet, daß die Erhebungen (11) auf der Mantelfläche des Scharnierzapfens (1) die Form von Pyramiden oder Kegeln aufweisen.

5. Scharniergelenk nach Anspruch 1, dadurch gekennzeichnet, daß die Erhebungen (11) über einen biegeelastischen Ansatz mit dem zylindrischen Grundkörper des Scharnierzapfens (1) verbunden sind.
